# EUROPÄISCHE PATENTSCHRIFT

(11) **EP 3 686 636 B1**
(45) Veröffentlichungstag und Bekanntmachung des Hinweises auf die Patenterteilung: **18.08.2021**
(21) Anmeldenummer: 20153369.2
(22) Anmeldetag: 06.11.2017
(51) Int. Cl.: G02B 6/00, G02F 1/00

(54) **PHOTONISCHES BAUELEMENT**
PHOTONIC COMPONENT
COMPOSANT PHOTONIQUE

(30) Priorität: 21.11.2016 DE 102016222873
(43) Veröffentlichungstag der Anmeldung: 29.07.2020
(62) Teilanmeldung aus: 17822548.8
(73) Patentinhaber: Sicoya GmbH, 12489 Berlin (DE)
(72) Erfinder: VITALI, Marco, 10439 Berlin (DE); BRONZI, Danilo, 12053 Berlin (DE)
(74) Vertreter: Fischer, Uwe

(56) Entgegenhaltungen:
- EP-A1- 1 906 564
- EP-A1- 2 386 890
- EP-A2- 1 168 039
- US-A1- 2010 128 336
- US-A1- 2015 277 207
- US-A1- 2015 309 261

## Beschreibung

Die Erfindung bezieht sich auf ein photonisches Bauelement mit einer Interferenzeinrichtung, die mindestens einen Eingang und zumindest einen ersten und einen zweiten Ausgang aufweist. Ein solches photonisches Bauelement ist beispielsweise aus der US-Offenlegungsschrift US 2010/128336 bekannt.

Andere Bauelemente sind aus den Druckschriften US 2015/277207 A1, EP 1 906 564 A1, EP 2 386 890 A1, US 2015/309261 A1 und EP 1 168 039 A2 bekannt.

Ein Bauelement mit den Merkmalen gemäß dem Oberbegriff des Patentanspruchs 1 ist in der Schrift US 2010/128336 A1 beschrieben.

Der Erfindung liegt die Aufgabe zugrunde, ein photonisches Bauelement mit einem kompakten Aufbau anzugeben.

Diese Aufgabe wird erfindungsgemäß durch ein photonisches Bauelement mit den Merkmalen gemäß Patentanspruch 1 gelöst. Vorteilhafte Ausgestaltungen des erfindungsgemäßen Bauelements sind in Unteransprüchen angegeben.

Danach ist erfindungsgemäß vorgesehen, dass das Bauelement umfasst:
- einen ersten Gitterkoppler, der einen ersten und einen zweiten Gitterkopplerausgang aufweist und mit einem Gitterkopplereingang mit dem ersten Ausgang der Interferenzeinrichtung in Verbindung steht,
- einen zweiten Gitterkoppler, der einen ersten und einen zweiten Gitterkopplerausgang aufweist und mit einem Gitterkopplereingang mit dem zweiten Ausgang der Interferenzeinrichtung in Verbindung steht,
- einen ersten Photodetektor, der mit dem ersten Gitterkopplerausgang des ersten Gitterkopplers in Verbindung steht,
- einen zweiten Photodetektor, der mit dem ersten Gitterkopplerausgang des zweiten Gitterkopplers in Verbindung steht, und
- eine Steuereinrichtung, die mit dem ersten und zweiten Photodetektor in Verbindung steht und anhand der Photosignale der beiden Photodetektoren oder einem mit den Photosignalen gebildeten Auswertsignal zumindest ein Steuersignal zur Ansteuerung der Interferenzeinrichtung bildet,
- wobei der erste und zweite Gitterkoppler in derselben Chipebene eines Chips des Bauelements angeordnet, insbesondere integriert, sind und
- wobei bei dem ersten und zweiten Gitterkoppler jeweils die zweiten Gitterkopplerausgänge jeweils einen Koppelpfad aus der Chipebene hinaus bilden, und zwar in einem Winkel zwischen 70 und 110 Grad zur Chipebene.

Ein wesentlicher Vorteil des erfindungsgemäßen Bauelements ist darin zu sehen, dass die Photodetektoren als Monitordetektoren eingesetzt werden können, mit denen sich die an den zweiten Gitterkopplerausgängen der Gitterkoppler austretende optische Leistung beobachten lässt. So ist es beispielsweise möglich, durch Ansteuerung der Interferenzeinrichtung eine Nachregelung vorzunehmen und den Arbeitspunkt in den Signalpfaden wunschgemäß einzustellen.

Ein weiterer wesentlicher Vorteil des erfindungsgemäßen Bauelements ist darin zu sehen, dass durch den erfindungsgemäß vorgesehenen Einsatz von Gitterkopplern jeweils ein chipebenenbezogen interner Ausgangskoppelpfad innerhalb der Chipebene und ein chipebenenbezogen externer Ausgangskoppelpfad aus der Chipebene heraus zur Verfügung steht. Dies ermöglicht es beispielsweise, Ausgangssignale, die das Bauelement verlassen sollen, über die chipebenenbezogen externen Ausgangskoppelpfade auszukoppeln und das Monitoring bzw. Beobachten der Ausgangssignale mittels der Photodetektoren über die chipebenenbezogen internen Ausgangskoppelpfade durchzuführen.

Ein zusätzlicher wesentlicher Vorteil des erfindungsgemäßen Bauelements ist darin zu sehen, dass durch die Anordnung des ersten und zweiten Gitterkopplers in derselben Chipebene des Chips des Bauelements ein kompakter Aufbau erreichbar ist und die Fertigung des Bauelements vereinfacht wird, insbesondere kostengünstig wird.

Vorteilhaft ist es, wenn auch die Interferenzeinrichtung in der Chipebene des Chips angeordnet oder in dieser integriert ist.

Darüber hinaus ist es vorteilhaft, wenn mindestens ein in der Chipebene des Chips des Bauelements angeordneter oder darin integrierter Wellenleiter
- den ersten Ausgang der Interferenzeinrichtung mit dem Gitterkopplereingang des ersten Gitterkopplers,
- den zweiten Ausgang der Interferenzeinrichtung mit dem Gitterkopplereingang des zweiten Gitterkopplers,
- den ersten Gitterkopplerausgang des ersten Gitterkopplers mit dem ersten Photodetektor oder
- den ersten Gitterkopplerausgang des zweiten Gitterkopplers mit dem zweiten Photodetektor
verbindet.

Der erste und zweite Photodetektor und der erste und zweite Gitterkoppler sind vorzugsweise jeweils in derselben Chipebene des Chips des Bauelements angeordnet, insbesondere in dieser integriert (bevorzugt monolithisch).

Bei einer alternativen Ausgestaltung des Bauelements ist vorgesehen, dass zumindest einer der Photodetektoren oder beide Photodetektoren außerhalb der Chipebene des Chips angeordnet sind.

Bei der letztgenannten Ausführungsform ist es vorteilhaft, wenn zwischen dem außerhalb der Chipebene des Chips angeordneten Photodetektor und dem mit diesem in Verbindung stehenden Gitterkoppler ein weiterer Koppler angeordnet ist, insbesondere ein solcher, der in der Chipebene angeordnet ist und dessen Kopplerausgang einen Koppelpfad aus der Chipebene hinaus bildet, und zwar in einem Winkel zwischen 70 und 110 Grad zur Chipebene.

Das Bauelement kann einen Summierer aufweisen, der als Auswertsignal ein Summensignal durch Summieren der beiden Photosignale bildet; das Summensignal kann von der Steuereinrichtung zur Ansteuerung der Interferenzeinrichtung herangezogen werden.

Auch kann das Bauelement einen Differenzbilder aufweisen, der als Auswertsignal ein Differenzsignal durch Subtrahieren eines der beiden Photosignale von dem anderen der beiden Photosignale bildet; das Differenzsignal kann von der Steuereinrichtung zur Ansteuerung der Interferenzeinrichtung herangezogen werden.

Vorzugsweise weist die Interferenzeinrichtung mindestens einen Mach-Zehnder-Modulator auf.

Bezüglich der Ausgestaltung des Mach-Zehnder-Modulators wird es als vorteilhaft angesehen, wenn dieser eingangsseitig einen 2x2-Richtkoppler mit zwei Eingängen und zwei Ausgängen oder einen 1x2-Teiler mit einem Eingang und zwei Ausgängen aufweist, der Eingang des eingangsseitigen 1x2-Teilers oder die zwei Eingänge des eingangsseitigen Richtkopplers den Eingang oder die zwei Eingänge der Interferenzeinrichtung bilden oder mit diesem oder diesen zumindest in Verbindung stehen, an die zwei Ausgänge des eingangsseitigen Richtkopplers oder 1x2-Teilers jeweils ein Wellenleiter angeschlossen ist, von denen mindestens einer mit einem von der Steuereinrichtung angesteuerten Phasenmodulator ausgestattet ist.

Der Mach-Zehnder-Modulator weist ausgangsseitig vorzugsweise einen 2x2-Richtkoppler mit zwei Eingängen und zwei Ausgängen auf.

An die zwei Eingänge des ausgangsseitigen Richtkopplers sind bevorzugt die zwei Wellenleiter angeschlossen, und die zwei Ausgänge des ausgangsseitigen Richtkopplers bilden bevorzugt die Ausgänge der Interferenzeinrichtung oder stehen bevorzugt mit diesen zumindest in Verbindung.

Auch ist es vorteilhaft, wenn die Interferenzeinrichtung zwei oder mindestens zwei Mach-Zehnder-Modulatoren aufweist.

Die Mach-Zehnder-Modulatoren sind vorzugsweise mittels eines eingangsseitigen Leistungsteilers, insbesondere eines eingangsseitigen 1x2-Teilers oder eines eingangsseitigen 2x2-Richtkopplers, sowie mittels eines ausgangsseitigen Leistungsteilers, insbesondere eines ausgangsseitigen 2x2-Richtkopplers, optisch parallel geschaltet.

Alternativ oder zusätzlich kann die Interferenzeinrichtung einen Ringresonator aufweisen.

Bei der letztgenannten Variante ist es von Vorteil, wenn die Interferenzeinrichtung zumindest zwei Koppler aufweist, die jeweils durch einen Abschnitt des Ringresonators und einen zu dem jeweiligen Abschnitt benachbarten Wellenleiter gebildet sind, wobei der mindestens eine Eingang der Interferenzeinrichtung oder zumindest einer der Eingänge der Interferenzeinrichtung über einen der zumindest zwei Koppler an den Ringresonator angekoppelt ist, der erste Ausgang der Interferenzeinrichtung über den einen der zumindest zwei Koppler oder einen anderen der zumindest zwei Koppler an den Ringresonator angekoppelt ist und der zweite Ausgang der Interferenzeinrichtung über den einen der zumindest zwei Koppler oder einen anderen der zumindest zwei Koppler an den Ringresonator angekoppelt ist.

Auch ist es von Vorteil, wenn zumindest ein Dämpfungsglied in den Signalpfad zwischen dem ersten Ausgang der Interferenzeinrichtung und dem ersten Photodetektor oder in den Signalpfad zwischen dem zweiten Ausgang der Interferenzeinrichtung und dem zweiten Photodetektor geschaltet ist.

Das Dämpfungsglied ist vorzugsweise einstellbar. Es steht vorzugsweise mit der Steuereinrichtung in Verbindung und wird von dieser angesteuert.

Von besonderem Vorteil ist es, wenn die Steuereinrichtung die Interferenzeinrichtung und das Dämpfungsglied derart ansteuert, dass ein an dem zweiten Gitterkopplerausgang des ersten Gitterkopplers austretendes und von der Interferenzeinrichtung zumindest auch amplitudenmoduliertes optisches Signal ein vorgegebenes Ein-Aus-Verhältnis erreicht.

Alternativ oder zusätzlich kann die Steuereinrichtung das Dämpfungsglied in vorteilhafter Weise derart einstellen, dass die optische Pfaddämpfung im Signalpfad zwischen dem ersten Ausgang der Interferenzeinrichtung und dem ersten Photodetektor und die optische Pfaddämpfung im Signalpfad zwischen dem zweiten Ausgang der Interferenzeinrichtung und dem zweiten Photodetektor gleich groß sind oder zumindest weniger als ein vorgegebenes Maß voneinander abweichen.

Das Dämpfungsglied weist bevorzugt eine Ladungsträgerinjektionsstruktur, insbesondere eine p-n- oder pin-Diodenstruktur, zur Ladungsträgerinjektion auf.

Der optische Signalpfad zwischen dem ersten Ausgang der Interferenzeinrichtung und dem ersten Photodetektor und der optische Signalpfad zwischen dem zweiten Ausgang der Interferenzeinrichtung und dem zweiten Photodetektor sind vorzugsweise achsensymmetrisch zueinander angeordnet, damit diese die Signaleigenschaften identisch oder zumindest hochgradig ähnlich beeinflussen.

Mit Blick auf den Signalfluss wird es als vorteilhaft angesehen, wenn der Signalpfad zwischen dem ersten Ausgang der Interferenzeinrichtung und dem ersten Photodetektor und der Signalpfad zwischen dem zweiten Ausgang der Interferenzeinrichtung und dem zweiten Photodetektor die gleiche Pfaddämpfung aufweisen, insbesondere aus baugleichen Komponenten bestehen, die identisch oder symmetrisch zueinander angeordnet sind.

In der Chipebene ist der maximale Abstand zwischen dem ersten Signalpfad, der zwischen dem ersten Ausgang der Interferenzeinrichtung und dem ersten Photodetektor gebildet wird, und dem zweiten Signalpfad, der zwischen dem zweiten Ausgang der Interferenzeinrichtung und dem zweiten Photodetektor gebildet wird, vorzugsweise kleiner als 100 µm.

Die Steuereinrichtung ist in den Chip vorzugsweise monolithisch integriert.

Der erste und zweite Gitterkoppler sind vorzugsweise baugleich.

Der zweite Gitterkopplerausgang des ersten und/oder zweiten Gitterkopplers bildet vorzugsweise einen optischen Signalausgang des photonischen Bauelements.

Die Erfindung bezieht sich außerdem auf ein Verfahren zum Betreiben eines photonischen Bauelements, wie es oben beschrieben worden ist. Der Betrieb erfolgt vorzugsweise wie oben bereits eingehend erläutert.

Die Erfindung wird nachfolgend anhand von Ausführungsbeispielen näher erläutert; dabei zeigen beispielhaft
- Figur 1: ein Ausführungsbeispiel für ein erfindungsgemäßes Bauelement, bei dem eine Interferenzeinrichtung, zwei Gitterkoppler, zwei Photodetektoren sowie Wellenleiter in derselben Chipebene eines Chips des Bauelements integriert sind,
- Figur 2: die Arbeitsweise der Interferenzeinrichtung 20 bei dem photonischen Bauelement gemäß Figur 1,
- Figur 3: ein Ausführungsbeispiel für ein erfindungsgemäßes Bauelement, bei dem zwei Mach-Zehnder-Interferometer-Modulatoren einer Interferenzeinrichtung vorgeordnet sind,
- Figur 4: ein Ausführungsbeispiel für eine optische Wellenleiterstruktur, die bei den Interferenzeinrichtungen der photonischen Bauelemente gemäß den Figuren 1 und 3 zusätzlich eingesetzt werden kann,
- Figur 5: ein Ausführungsbeispiel für ein photonisches Bauelement, bei dem eine Interferenzeinrichtung einen Ringresonator umfasst,
- Figur 6: ein Ausführungsbeispiel für ein photonisches Bauelement, bei dem zwischen Gitterkopplern und Photodetektoren jeweils ein Dämpfungsglied vorgesehen ist,
- Figur 7: die Arbeitsweise der Dämpfungsglieder bei der Ausführungsvariante gemäß Figur 6,
- Figur 8: ein Ausführungsbeispiel für ein photonisches Bauelement, bei dem Photodetektoren außerhalb der Chipebene integriert sind, in der die Interferenzeinrichtung sowie die Gitterkoppler integriert sind,
- Figur 9: ein Ausführungsbeispiel für ein erfindungsgemäßes photonisches Bauelement, bei dem zwei Signalpfade, die der Interferenzeinrichtung nachgeordnet sind, zwar nicht parallel, aber spiegelsymmetrisch zu einer Spiegelachse angeordnet sind,
- Figur 10: ein Ausführungsbeispiel für eine Ladungsträgerinjektionsstruktur, die als Dämpfungsglied bei dem Ausführungsbeispiel gemäß den Figuren 5 und 6 eingesetzt werden kann,
- Figur 11: ein Ausführungsbeispiel für ein erfindungsgemäßes photonisches Bauelement mit einer Vielzahl an Signalpfaden,
- Figur 12: ein photonisches Bauelement, bei dem an die ersten Ausgänge zweier Gitterkoppler Photodetektoren unmittelbar aufgesetzt sind, und
- Figur 13: beispielhaft einen Abschnitt einer Ausführungsvariante für das photonische Bauelement gemäß Figur 1 in einem Querschnitt.

In den Figuren werden für identische oder vergleichbare Komponenten der Übersicht halber stets dieselben Bezugszeichen verwendet.

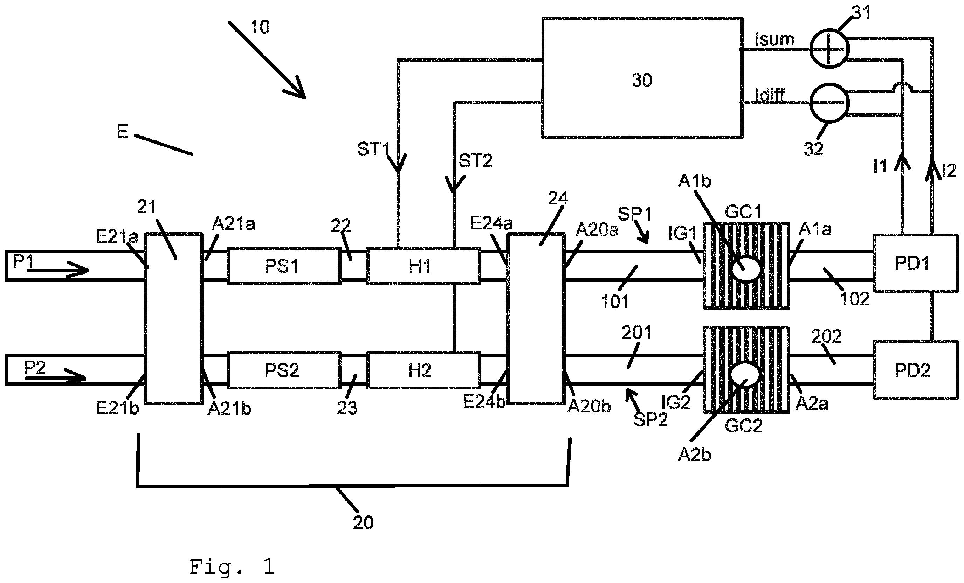

Die Figur 1 zeigt ein photonisches Bauelement 10, das eingangsseitig eine Interferenzeinrichtung 20 aufweist. An einen ersten Ausgang A20a der Interferenzeinrichtung 20 ist ein erster Signalpfad SP1 angeschlossen, der einen ersten Gitterkoppler GC1, einen ersten Photodetektor PD1 sowie zwei Wellenleiter 101 und 102 umfasst. Der Wellenleiter 101 verbindet den ersten Ausgang A20a der Interferenzeinrichtung 20 mit einem Gitterkopplereingang IG1 des ersten Gitterkopplers GC1. Der Wellenleiter 102 verbindet einen ersten Gitterkopplerausgang A1a des ersten Gitterkopplers GC1 mit dem ersten Photodetektor PD1.

Der erste Gitterkoppler GC1 weist darüber hinaus einen zweiten Gitterkopplerausgang A1b auf, der einen Koppelpfad aus der Bildebene der Figur 1 hinaus bildet, und zwar in einem Winkel zwischen 70° und 110° zur Bildebene. Die Bildebene in Figur 1 wird durch eine Chipebene E eines Chips des photonischen Bauelements 10 gebildet.

An einen zweiten Ausgang A20b der Interferenzeinrichtung 20 ist ein zweiter Signalpfad SP2 angeschlossen, der einen zweiten Gitterkoppler GC2 und einen zweiten Photodetektor PD2 aufweist. Darüber hinaus sind zwei Wellenleiter 201 und 202 vorhanden, von denen einer, nämlich der Wellenleiter 201, den zweiten Ausgangs A20b der Interferenzeinrichtung 20 mit dem Gitterkopplereingang IG2 des zweiten Gitterkopplers GC2 und der andere Wellenleiter 202 einen ersten Gitterkopplerausgang A2a des zweiten Gitterkopplers GC2 mit dem zweiten Photodetektor PD2 verbindet.

Ein zweiter Gitterkopplerausgang A2b des zweiten Gitterkopplers GC2 bildet einen Koppelpfad aus der Chipebene E des Chips des photonischen Bauelements 10 hinaus, und zwar in einem Winkel zwischen 70° und 110° zur Chipebene E bzw. zur Bildebene in Figur 1.

Die Interferenzeinrichtung 20 umfasst einen eingangsseitigen 2x2-Richtkoppler 21 mit zwei Eingängen E21a und E21b sowie zwei Ausgängen A21a und A21b. Die beiden Eingänge E21a und E21b des eingangsseitigen Richtkopplers 21 bilden die Eingänge der Interferenzeinrichtung 20.

An die zwei Ausgänge A21a und A21b des eingangsseitigen Richtkopplers 21 ist jeweils ein Wellenleiter 22 bzw. 23 angeschlossen. Die beiden Wellenleiter 22 und 23 verbinden den eingangsseitigen Richtkoppler 21 mit Eingängen E24a und E24b eines ausgangsseitigen Richtkopplers 24. Die Ausgänge des ausgangsseitigen Richtkopplers 24 bilden die Ausgänge A20a und A20b der Interferenzeinrichtung 20.

Die beiden Wellenleiter 22 und 23 sind jeweils mit einem Phasenmodulator bzw. Phasenschieber H1 bzw. H2 ausgestattet. Die Ansteuerung der beiden Phasenschieber H1 und H2 erfolgt durch Steuersignale ST1 und ST2, die von einer Steuereinrichtung 30 erzeugt werden. Die Steuereinrichtung 30 steht eingangsseitig mit den beiden Photodetektoren PD1 und PD2 in Verbindung und wertet deren Photoströme bzw. Photosignale I1 und I2 oder alternativ Auswertsignale, die mit den Photosignalen I1 und I2 gebildet werden, aus. Bei dem Ausführungsbeispiel gemäß Figur 1 ist der Steuereinrichtung 30 ein Summierer 31 und ein Differenzbilder 32 vorgeordnet, die die Photosignale I1 und I2 der beiden Photodetektoren PD1 und PD2 verarbeiten und als Auswertsignale ein Summensignal Isum und ein Differenzsignal Idiff erzeugen.

Die Steuereinrichtung 30 ist derart ausgestaltet, dass sie die Steuersignale ST1 und ST2 so erzeugt, dass die Empfangsleistungen bei den beiden Photodetektoren PD1 und PD2 und damit deren Photoströme bzw. Photosignale I1 und I2 gleich groß sind.

Um eingangsseitig in das photonische Bauelement 10 eingespeiste optische Signale P1 und P2 darüber hinaus in der Amplitude und/oder der Phase modulieren zu können, weist das Bauelement 10 zwei Modulatoren PS1 und PS2 auf, die bei dem Ausführungsbeispiel gemäß Figur 1 in den Wellenleitern 22 und 23 der Interferenzeinrichtung 20 integriert sind. Die zwei Modulatoren PS1 und PS2 können von der Steuereinrichtung 30 oder einer anderen in der Figur 1 aus Gründen der Übersicht nicht gezeigten Einrichtung angesteuert werden.

Bei dem Ausführungsbeispiel gemäß Figur 1 sind die Interferenzeinrichtung 20, die beiden Gitterkoppler GC1 und GC2, die beiden Photodetektoren PD1 und PD2, die Wellenleiter 101, 102, 201 und 202, der Summierer 31, der Differenzbilder 32 sowie die Steuereinrichtung 30 in derselben Chipebene E, die in der Figur 1 durch die Bildebene der Figur 1 gebildet ist, eines Chips des photonischen Bauelements 10 integriert, vorzugsweise monolithisch integriert. Der Chip ist vorzugsweise ein Silizium-Chip, insbesondere auf der Basis von SOI-Material.

Bei dem in der Figur 1 gezeigten Aufbau des Bauelements 10 bilden die beiden Gitterkoppler GC1 und GC2 jeweils einen chipebenenbezogen internen Ausgangskoppelpfad, der mit den Wellenleitern 102 bzw. 202 und über letztere mit den Photodetektoren PD1 und PD2 in Verbindung steht, und einen chipebenenbezogen externen Ausgangskoppelpfad, der eine Auskopplung von elektromagnetischer Strahlung aus der Chipebene E heraus vornimmt. Dieser Aufbau ermöglicht es beispielsweise, Ausgangssignale, die das Bauelement 10 verlassen sollen, über die chipebenenbezogen externen Ausgangskoppelpfade auszukoppeln und das Monitoring der Ausgangssignale mittels der Photodetektoren PD1 und PD2 innerhalb der Chipebene über die chipebenenbezogen internen Ausgangskoppelpfade durchzuführen.

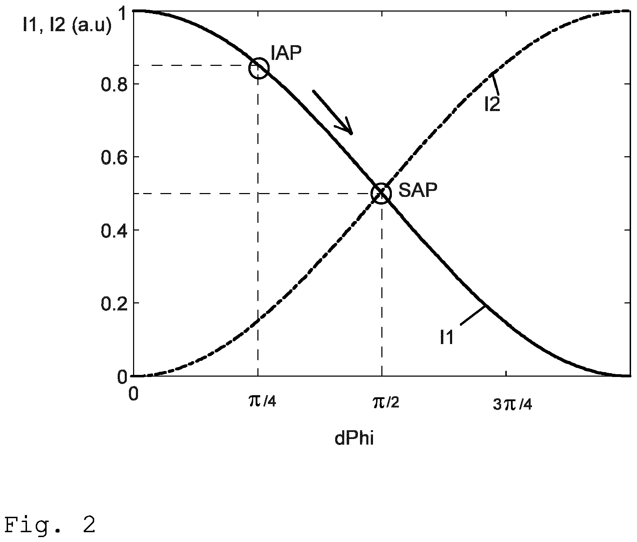

Die Figur 2 zeigt beispielhaft die Arbeitsweise der Steuereinrichtung 30. Es lässt sich erkennen, dass die Steuereinrichtung 30 die Steuersignale ST1 und ST2 derart erzeugt, dass die Empfangsleistung bei den beiden Photodetektoren PD1 und PD2 und damit deren Photosignale I1 und I2 gleich groß werden, also die Photosignale I1 und I2 jeweils 50 % der sich bei Summenbildung beider Photosignale ergebenden Signalsumme betragen. Eine solche Leistungsverteilung lässt sich erreichen, indem mit den Phasenschiebern H1 und H2 eine Phasendifferenz dPhi von π/2 (siehe Figur 2) zwischen den Wellenleitern 22 und 23, also dem Signalpfad zwischen dem Ausgang A21a und dem Eingang E24a und dem Signalpfad zwischen dem Ausgang A21b und dem Eingang E24b, eingestellt wird.

In der Figur 2 ist beispielhaft gezeigt, wie im Falle einer Abweichung des tatsächlichen Arbeitspunkts - hier Istarbeitspunkt IAP genannt - von dem erwähnten Sollarbeitspunkt SAP, bei dem die Leistungsverteilung auf die zwei Photodetektoren PD1 und PD2 jeweils 50% beträgt, die Steuereinrichtung 30 die beiden Phasenschieber H1 und H2 derart nachregelt, dass durch eine korrigierte Phasenverschiebung dPhi zwischen den Wellenleitern 22 und 23 der jeweilige Istarbeitspunkt IAP zum Sollarbeitspunkt SAP verschoben wird.

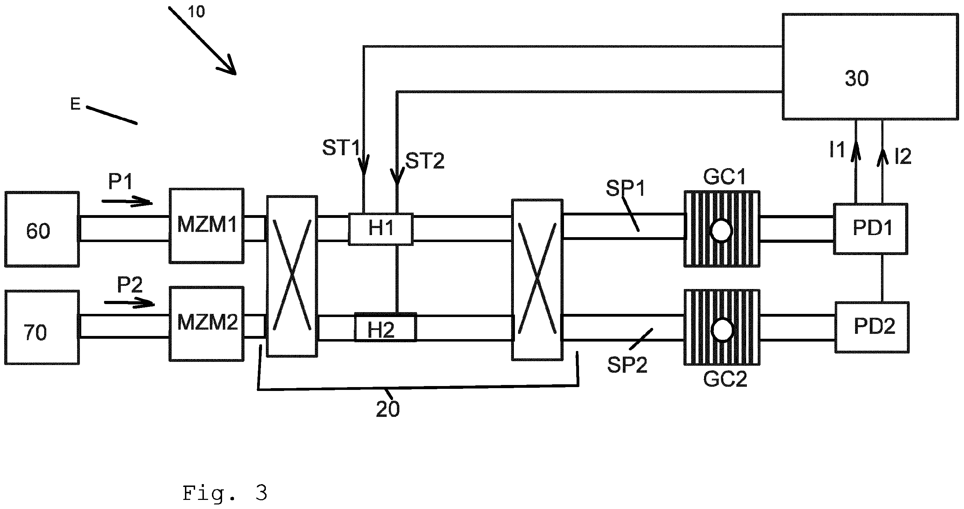

Die Figur 3 zeigt ein weiteres Ausführungsbeispiel für ein photonisches Bauelement 10, bei dem eine Interferenzeinrichtung 20, zwei Gitterkoppler GC1 und GC2, zwei Photodetektoren PD1 und PD2 sowie eine Steuereinrichtung 30 vorhanden sind. Im Unterschied zu dem Ausführungsbeispiel gemäß Figur 1 sind Zweier-Mach-Zehnder-Modulatoren MZM1 und MZM2 vorhanden, die eine Amplitudenmodulation der von zwei Emittern 60 und 70 erzeugten Photosignale P1 und P2 vornehmen, bevor diese in die Interferenzeinrichtung 20 eingespeist werden.

Bei dem Ausführungsbeispiel gemäß Figur 3 sind die Interferenzeinrichtung 20, die beiden Gitterkoppler GC1 und GC2, die beiden Photodetektoren PD1 und PD2, die Steuereinrichtung 30 sowie auch die Emitter 60 und 70 in derselben Chipebene E des Bauelements 10 integriert. Die beiden Emitter 60 bzw. 70 können in hybrider Weise oder auch monolithisch integriert sein.

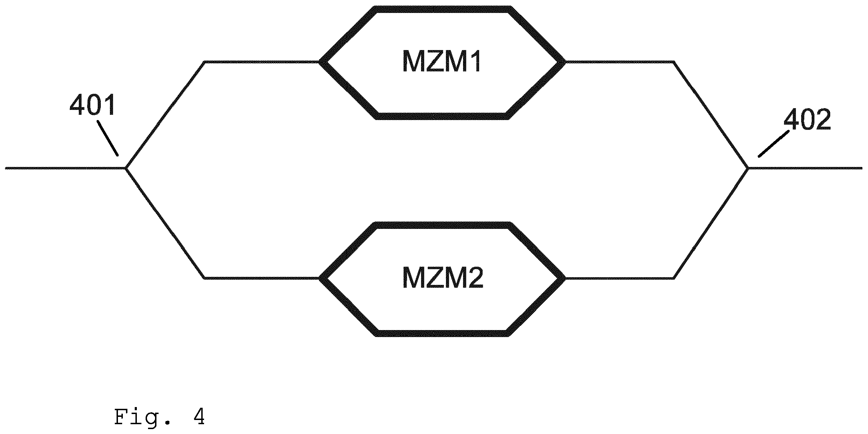

Die Figur 4 zeigt ein Ausführungsbeispiel für eine Anordnung von zwei Mach-Zehnder-Modulatoren MZM1 und MZM2, die mittels eines eingangsseitigen Leistungsteilers 401 und eines ausgangsseitigen Leistungsteilers 402 optisch parallel geschaltet sind. Die Parallelschaltung der beiden Mach-Zehnder-Modulatoren MZM und MZM2 kann in den Interferenzeinrichtungen 20 gemäß den Figuren 1 und 3 integriert werden, beispielsweise, wenn das optische Bauelement 10 einen QPSK-Transmitter bilden soll.

Die Ansteuerung der Mach-Zehnder-Modulatoren MZM1 und MZM2 erfolgt vorzugsweise durch die Steuereinrichtung 30 gemäß Figur 1 bzw. Figur 3.

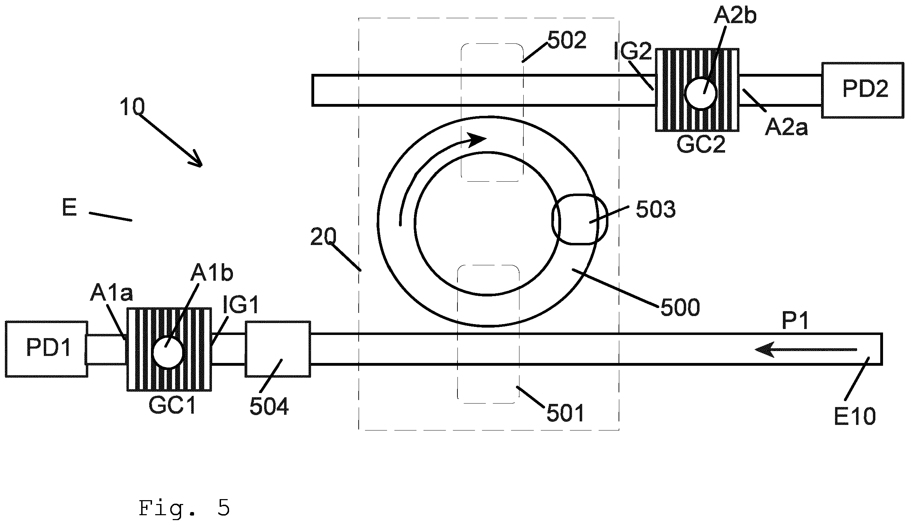

Die Figur 5 zeigt ein weiteres Ausführungsbeispiel für ein photonisches Bauelement 10, das mit einer Interferenzeinrichtung 20, zwei Gitterkopplern GC1 und GC2 sowie zwei Photodetektoren PD1 und PD2 ausgestattet ist. Die beiden Photodetektoren PD1 und PD2 senden ihre Photosignale zu einer Steuereinrichtung, die aus Gründen der Übersicht in der Figur 5 nicht weiter dargestellt ist und die Ansteuerung der Interferenzeinrichtung 20 durchführt.

Die beiden Gitterkoppler GC1 und GC2 weisen jeweils einen Gitterkopplereingang IG1 und IG2, zwei erste Gitterkopplerausgänge A1a bzw. A2a und zwei zweite Gitterkopplerausgänge A1b bzw. A2b auf. Die Koppelpfade, die durch die zwei ersten Gitterkopplerausgänge A1a und A2a der beiden Gitterkoppler GC1 und GC2 gebildet werden, liegen in ein und derselben Chipebene E eines Chips des photonischen Bauelements 10, also in der Bildebene gemäß Figur 5.

Die Koppelpfade, die durch die zweiten Gitterkopplerausgänge A1b und A2b der beiden Gitterkoppler GC1 und GC2 gebildet werden, stehen in einem Winkel zwischen 70° und 110° zur Chipebene E bzw. zur Bildebene in Figur 5. Mit anderen Worten wird optische Strahlung, die durch die Gitterkopplerausgänge A1b und A2b ausgekoppelt wird, aus der Bildebene in Figur 5 in Richtung auf den Betrachter ausgekoppelt.

Die Interferenzeinrichtung 20 weist bei dem Ausführungsbeispiel gemäß Figur 5 einen Ringresonator 500 auf, der über einen ersten Koppler 501 mit einem Signaleingang E10 des photonischen Bauelements 10 sowie dem ersten Gitterkoppler GC1 und über diesen mit dem ersten Photodetektor PD1 gekoppelt ist.

Ein zweiter Koppler 502 der Interferenzeinrichtung 20 koppelt den Ringresonator 500 mit dem zweiten Gitterkoppler GC2 und damit mit dem zweiten Photodetektor PD2.

Der Ringresonator 500 kann mit einem Phasenmodulator 503 ausgestattet sein, der von einer nicht weiter gezeigten Steuereinrichtung des Bauelements 10 angesteuert wird. Die Ansteuerung des Phasenmodulators 503 durch die Steuereinrichtung erfolgt vorzugsweise derart, dass die beiden Photodetektoren PD1 und PD2 jeweils ein vorgegebenes Empfangsleistungsverhältnis bezogen auf die Leistung des Eingangssignals P1 am Eingang E10 empfangen können. Bezüglich der Ansteuerung des Phasenmodulators 503 bzw. der Interferenzeinrichtung 20 sei auf die obigen Ausführungen im Zusammenhang mit den Figuren 1 bis 3 verwiesen, die hier entsprechend gelten.

Zwischen dem ersten Gitterkoppler GC1 und dem ersten Koppler 501 kann alternativ zu dem Phasenmodulator 503 oder zusätzlich zu diesem ein einstellbares Dämpfungsglied 504 vorgesehen sein, um durch Einstellen einer zusätzlichen Dämpfung das gewünschte Verhältnis der Empfangsleistungen an den beiden Photodetektoren PD1 und PD2 zu erreichen.

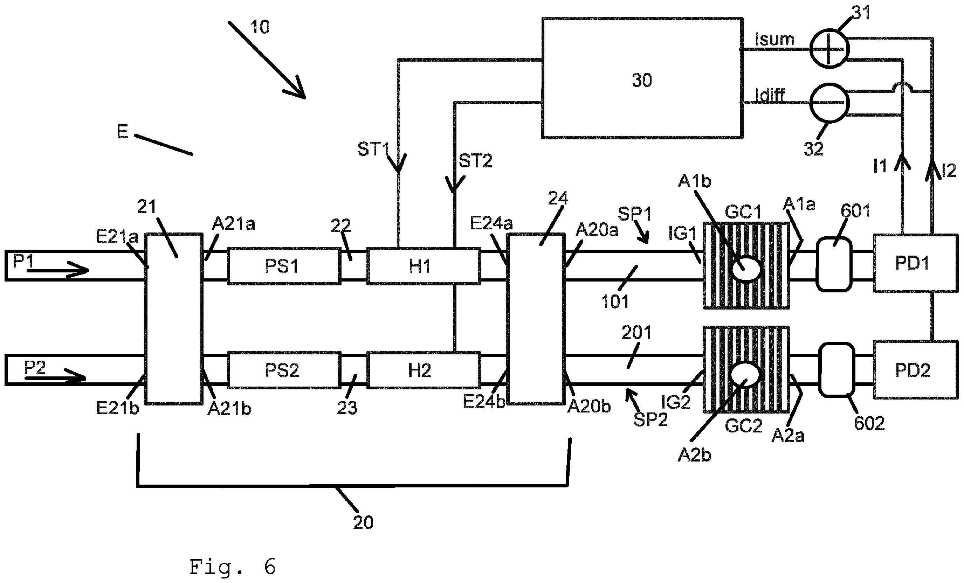

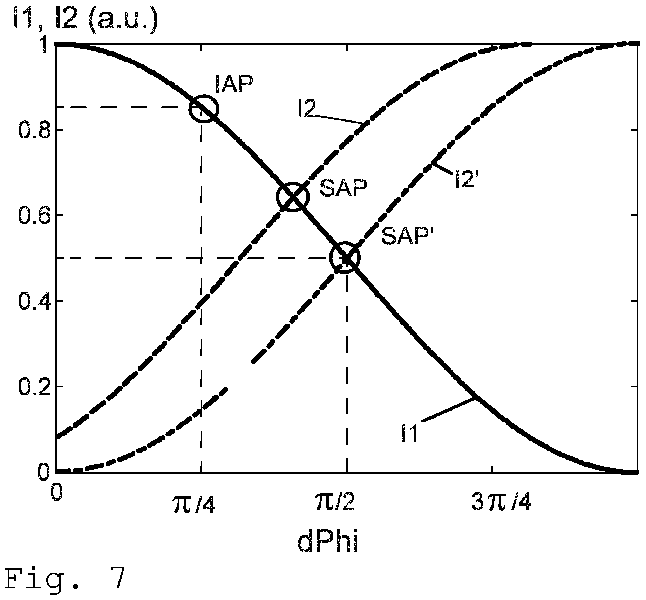

In der Figur 6 ist eine alternative Ausgestaltung des photonischen Bauelements 10 gemäß Figur 1 gezeigt. Es lässt sich erkennen, dass zwischen die beiden Gitterkoppler GC1 und GC2 und die jeweils zugeordneten Photodetektoren PD1 und PD2 jeweils ein Dämpfungsglied 601 bzw. 602 geschaltet ist. Die Dämpfungsglieder 601 und 602 werden von der Steuereinrichtung 30 angesteuert. Durch die Ansteuerung der Dämpfungsglieder 601 und 602 ist es möglich, den Arbeitspunkt des Bauelements 10 noch weiter zu verändern bzw. einzustellen, als dies bei dem Ausführungsbeispiel gemäß Figur 1 bzw. Figur 2 möglich ist. So lässt sich in der Figur 7 erkennen, dass durch eine Ansteuerung des Dämpfungsglieds 602 im Signalpfad SP2 das Photosignal I2 des zweiten Photodetektors PD2 verschoben werden kann (siehe verschobenes Photosignal 12'), so dass damit einhergehend auch der ohne eine aktive Dämpfung resultierende Sollarbeitspunkt SAP zu einem neuen Sollarbeitspunkt SAP' verändert werden kann.

Beispielsweise ist es möglich, dass die Steuereinrichtung 30 die Interferenzeinrichtung 20 und eines der Dämpfungsglieder 601 bzw. 602 oder beide derart ansteuert, dass ein an dem zweiten Gitterkopplerausgang A1b des ersten Gitterkopplers GC1 austretendes und von der Interferenzeinrichtung 20 oder einer vor- oder nachgeordneten anderen Einrichtung zumindest auch amplitudenmoduliertes optisches Signal ein vorgegebenes Ein-Aus-Verhältnis erreicht.

Alternativ oder zusätzlich kann die Steuereinrichtung 30 und eines der Dämpfungsglieder 601 bzw. 602 oder beide derart einstellen, dass die optische Pfaddämpfung im Signalpfad SP1 zwischen dem ersten Ausgang A20a der Interferenzeinrichtung 20 und dem ersten Photodetektor PD1 und die optische Pfaddämpfung im Signalpfad SP2 zwischen dem zweiten Ausgang A20b der Interferenzeinrichtung 20 und dem zweiten Photodetektor PD2 gleich groß sind oder zumindest weniger als ein vorgegebenes Maß voneinander abweichen.

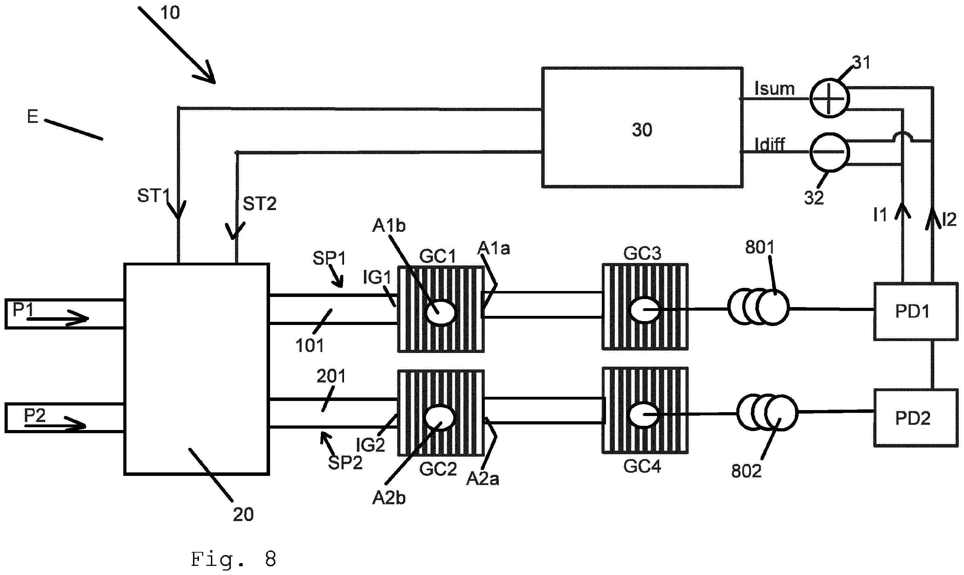

Die Figur 8 zeigt ein Ausführungsbeispiel für ein photonisches Bauelement 10, bei dem die beiden Photodetektoren PD1 und PD2 nicht in der Chipebene E des Bauelements 10 bzw. nicht in der Bildebene gemäß Figur 8 liegen, sondern in einer anderen Chipebene und somit externe Photodetektoren bilden. Das Auskoppeln der optischen Strahlung aus der Chipebene E erfolgt durch zwei weitere Gitterkoppler GC3 und GC4 in Richtung auf die externen Photodetektoren PD1 und PD2. Der Anschluss zwischen den Photodetektoren PD1 und PD2 und den zugeordneten Gitterkopplern GC3 und GC4 kann beispielsweise über externe Fasern 801 bzw. 802 erfolgen.

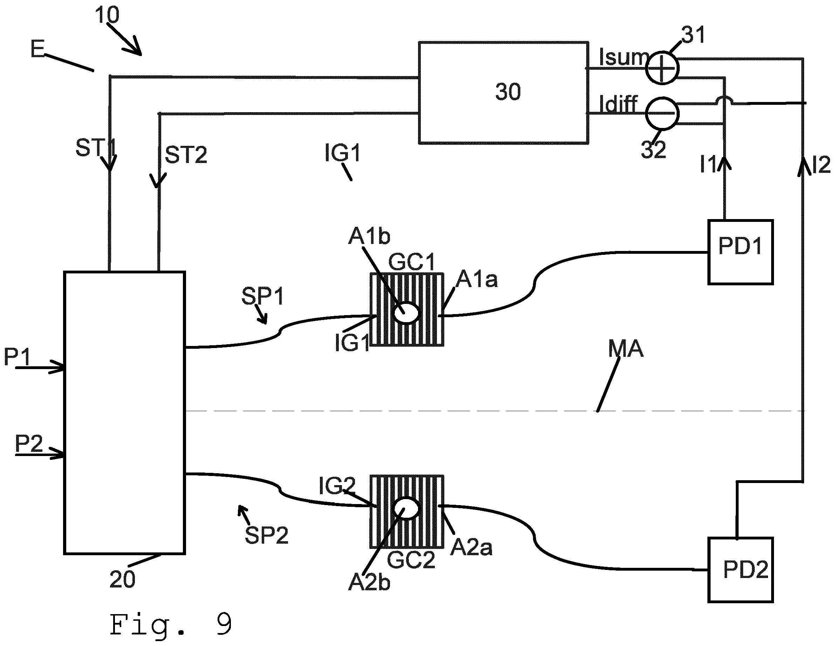

Die Figur 9 zeigt ein weiteres Ausführungsbeispiel für ein optisches Bauelement 10, das im Wesentlichen dem Bauelement gemäß Figur 1 entspricht. Im Unterschied zu dem Ausführungsbeispiel gemäß Figur 1 sind die Signalpfade SP1 und SP2 nicht geradlinig ausgebildet, sondern abschnittsweise gekrümmt. Um zu gewährleisten, dass die Signalpfade SP1 und SP2 optisch dasselbe Verhalten aufweisen, ist die Anordnung bzw. Ausgestaltung der beiden Signalpfade SP1 und SP2 bezogen auf eine Mittelachse MA zwischen den beiden Signalpfaden SP1 und SP2 achsensymmetrisch.

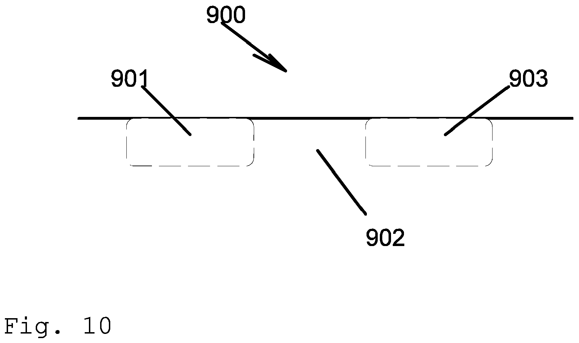

Die Figur 10 zeigt im Querschnitt ein Ausführungsbeispiel für eine Ladungsträgerinjektionsstruktur 900, die als Dämpfungsglied 601 bzw. 602 bei dem Ausführungsbeispiel gemäß Figur 5, 6 und 7 eingesetzt werden kann. Die Ladungsträgerinjektionsstruktur 900 umfasst ein p-dotiertes Gebiet 901, ein un- oder schwachdotiertes mittleres Gebiet 902 sowie ein n-dotiertes Gebiet 903. Die zu dämpfende optische Welle wird vorzugsweise durch das mittlere Gebiet 902 gelenkt.

Durch Anlegen einer Flussspannung an die Ladungsträgerinjektionsstruktur 900, beispielsweise durch die Steuereinrichtung 30 gemäß den Figur 1 lassen sich Ladungsträger in das mittlere Gebiet 902 injiziieren, wodurch - aufgrund der Ladungsträgerdämpfung - die dort geführte optische Welle gedämpft wird.

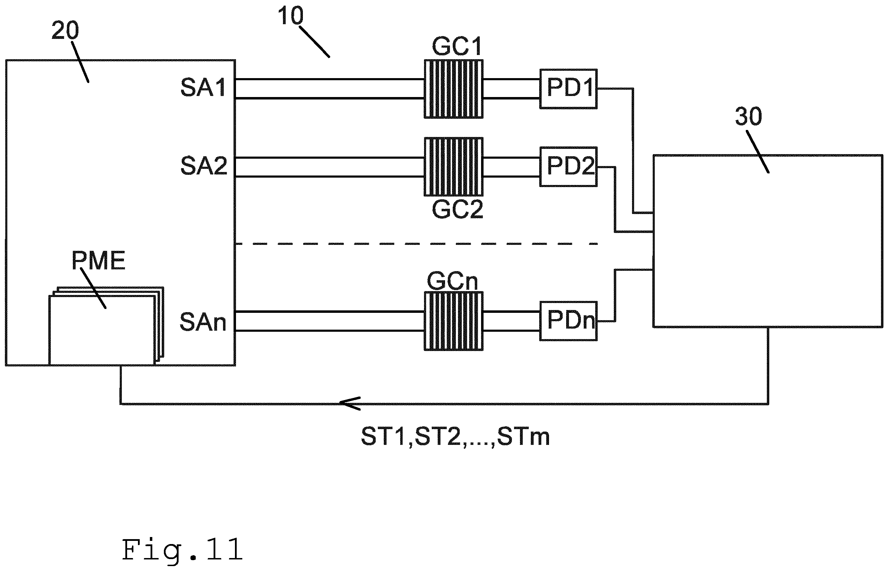

Die Figur 11 zeigt ein photonisches Bauelement 10 mit einer Vielzahl an Signalpfaden SP1, SP2,..., SPn, die jeweils einen Photodetektor PD1, PD2,..., PDn aufweisen. Eine Interferenzeinrichtung 20 des Bauelements weist eine entsprechende Anzahl an Signalausgängen SA1, SA2,..., SAn auf und ist mit einer Vielzahl m an Phasenmodulatoren PME ausgestattet, die von einer Steuereinrichtung 30 mittels Steuersignals ST1, ST2,..., STm angesteuert werden. Bezüglich der Ansteuerung sei auf die obigen Ausführungen im Zusammenhang mit den Figuren 1 bis 10 verwiesen.

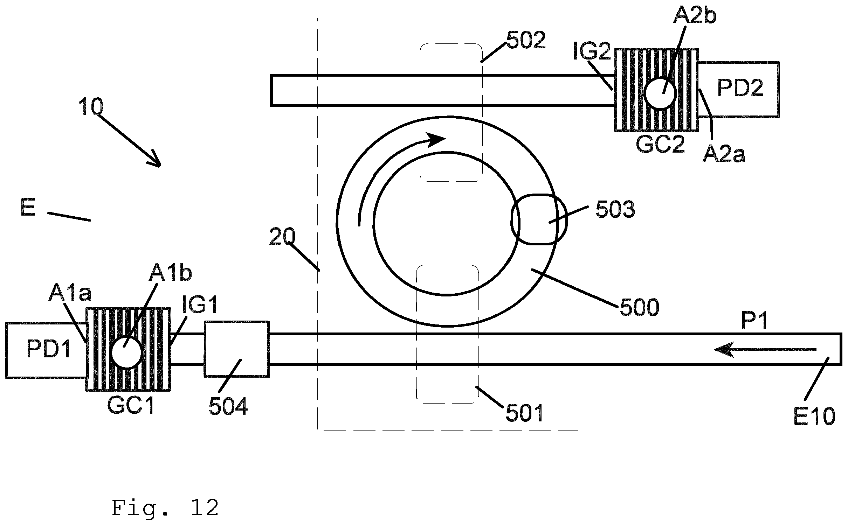

Die Figur 12 zeigt ein photonisches Bauelement 10, das dem Ausführungsbeispiel gemäß Figur 5 entspricht. Im Unterschied zum Ausführungsbeispiel gemäß Figur 5 sind die Photodetektoren PD1 und PD2 nicht über Wellenleiter angeschlossen, sondern unmittelbar an die ersten Ausgänge A1a bzw. A2a der beiden Gitterkoppler GC1 und GC2 aufgesetzt. Im Übrigen gelten die Ausführungen zu Figur 5 für das Ausführungsbeispiel gemäß Figur 12 entsprechend.

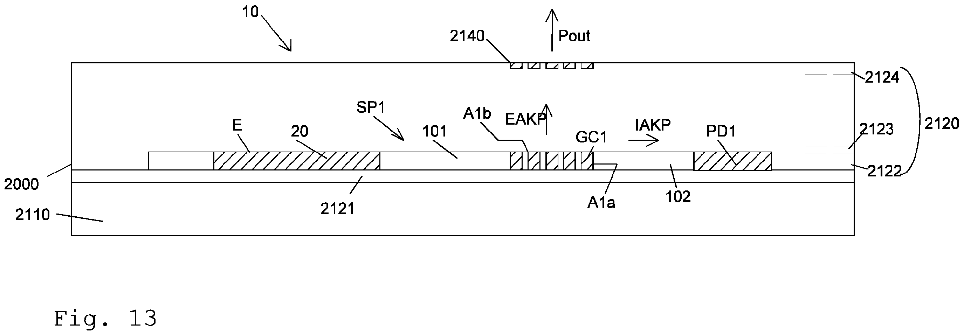

Die Figur 13 zeigt eine bevorzugte Ausführungsvariante für das photonische Bauelement 10 gemäß Figur 1 in einem Querschnitt an der Stelle des ersten Signalpfades SP1. Der Chip 2000 des Bauelements 10 umfasst ein Substrat 2110, bei dem es sich beispielsweise um ein Siliziumsubstrat handeln kann.

Auf dem Substrat 2110 ist ein eine Vielzahl an Materialschichten aufweisendes Schichtpaket 2120 angeordnet. In dem Schichtpaket 2120 sind die optischen Wellenleiter 101 und 102, der Gitterkoppler GC1, eine Beugungs- und Brechungsstruktur in Form einer Linse 2140 und der Photodetektor PD1 integriert. Die optischen Wellenleiter 101 und 102, der Gitterkoppler GC1 sind in derselben Schicht und damit in der selben Chipebene E integriert.

Die auf dem Substrat 2110 befindliche erste bzw. unterste Schicht des Schichtpakets 2120 ist eine Siliziumoxidschicht 2121, auf der eine Siliziumschicht 2122 aufliegt. In der Siliziumschicht 2122 sind zumindest die Wellenleiter 101 und 102 und der Gitterkoppler GC1 integriert. Die optischen Wellenleiter 101 und 102 können beispielsweise so genannte SOI-Rippen- oder Streifenwellenleiter sein, bei dem die optische Strahlung in der Siliziumschicht 2122 geführt wird.

Der Photodetektor PD1 kann in modifizierten Abschnitten der Siliziumschicht 2122 und/oder in einer auf der Siliziumschicht 2122 befindlichen anderen Schicht 2123, bei der es sich beispielsweise um eine Germanium- oder Silizium-Germanium-Schicht handeln kann, integriert sein.

In der obersten Materialschicht 2124 oder zumindest in einer der oberen Materialschichten des Schichtpakets 2120 ist die Linse 2140 integriert. Die Linse 2140 befindet sich also - vom Substrat 2110 aus gesehen - oberhalb der wellenführenden Schicht 2122 des Schichtpakets 2120 bzw. oberhalb der Schicht, in der der Gitterkoppler GC1 und die Wellenleiter 101 und 102 integriert sind.

In der Figur 13 lässt sich erkennen, dass durch den vorgesehenen Einsatz des Gitterkopplers GC1 ein chipebenenbezogen interner Ausgangskoppelpfad IAKP innerhalb der Chipebene E und ein chipebenenbezogen externer Ausgangskoppelpfad EAKP aus der Chipebene E heraus zur Verfügung steht. Dies ermöglicht es beispielsweise, ein Ausgangssignal Pout, das das Bauelement 10 über den Signalpfad PD1 verlassen soll, über den externen Ausgangskoppelpfad EAKP auszukoppeln und das Monitoring bzw. das Beobachten des Ausgangssignals mittels des Photodetektors PD1 über den internen Ausgangskoppelpfad IAKP durchzuführen.

Obwohl die Erfindung im Detail durch bevorzugte Ausführungsbeispiele näher illustriert und beschrieben wurde, so ist die Erfindung nicht durch die offenbarten Beispiele eingeschränkt sondern alleine durch die Ansprüche definiert.

### Bezugszeichenliste

- 10: Bauelement
- 20: Interferenzeinrichtung
- 21: 2x2-Richtkoppler
- 22: Wellenleiter
- 23: Wellenleiter
- 24: Richtkoppler
- 30: Steuereinrichtung
- 31: Summierer
- 32: Differenzbilder
- 60: Emitter
- 70: Emitter
- 101: Wellenleiter
- 102: Wellenleiter
- 201: Wellenleiter
- 202: Wellenleiter
- 401: Leistungsteiler
- 402: Leistungsteiler
- 500: Ringresonator
- 501: Koppler
- 502: Koppler
- 503: Phasenmodulator
- 504: Dämpfungsglied
- 601: Dämpfungsglied
- 602: Dämpfungsglied
- 801: Faser
- 802: Faser
- 900: Ladungsträgerinjektionsstruktur
- 901: Gebiet
- 902: Gebiet
- 903: Gebiet
- 2000: Chip
- 2110: Substrat
- 2120: Schichtpaket
- 2121: Siliziumoxidschicht
- 2122: Siliziumschicht
- 2123: Schicht
- 2124: oberste Materialschicht
- 2140: Linse

- A1a: Gitterkopplerausgang
- A1b: Gitterkopplerausgang
- A2a: Gitterkopplerausgang
- A2b: Gitterkopplerausgang
- A20a: Ausgang
- A20b: Ausgang
- A21a: Ausgang
- A21b: Ausgang
- E: Chipebene
- E10: Signaleingang
- E20: Eingang
- E21a: Eingang
- E21b: Eingang
- E24a: Eingang
- E24b: Eingang
- EAKP: externer Ausgangskoppelpfad
- GC1: Gitterkoppler
- GC2: Gitterkoppler
- GC3: Gitterkoppler
- GC4: Gitterkoppler
- GCn: Gitterkoppler
- H1: Phasenschieber
- H2: Phasenschieber
- I1: Photostrom bzw. Photosignal
- I2: Photosignal
- I2': verschobenes Photosignal
- IAP: Istarbeitspunkt
- IAKP: interner Ausgangskoppelpfad
- Idiff: Differenzsignal
- Isum: Summensignal
- IG1: Gitterkopplereingang
- IG2: Gitterkopplereingang
- MA: Mittelachse
- MZM1: Mach-Zehnder-Modulator
- MZM2: Mach-Zehnder-Modulator
- P1: Signal
- P2: Signal
- PD1: Photodetektor
- PD2: Photodetektor
- PDn: Photodetektor
- PME: Phasenmodulator
- Pout: Ausgangssignal
- PS1: Modulator
- PS2: Modulator
- SA1: Signalausgang
- SA2: Signalausgang
- SAn: Signalausgang
- SAP: Sollarbeitspunkt
- SAP': Sollarbeitspunkt
- SP1: Signalpfad
- SP2: Signalpfad
- Spn: Signalpfad
- ST1: Steuersignal
- ST2: Steuersignal
- STm: Steuersignal

## Patentansprüche

1. Photonisches Bauelement (10) mit einer Interferenzeinrichtung (20), die mindestens einen Eingang und zumindest einen ersten und einen zweiten Ausgang aufweist,
wobei
das Bauelement (10) darüber hinaus umfasst:
- einen ersten Gitterkoppler (GC1), der einen ersten und einen zweiten Gitterkopplerausgang aufweist und mit einem Gitterkopplereingang mit dem ersten Ausgang der Interferenzeinrichtung (20) in Verbindung steht,
- einen zweiten Gitterkoppler (GC2), der einen ersten und einen zweiten Gitterkopplerausgang aufweist und mit einem Gitterkopplereingang mit dem zweiten Ausgang der Interferenzeinrichtung (20) in Verbindung steht,
- einen ersten Photodetektor (PD1), der mit dem ersten Gitterkopplerausgang des ersten Gitterkopplers (GC1) in Verbindung steht,
- einen zweiten Photodetektor (PD2), der mit dem ersten Gitterkopplerausgang des zweiten Gitterkopplers (GC2) in Verbindung steht, und
- eine Steuereinrichtung (30), die mit dem ersten und zweiten Photodetektor (PD1, PD2) in Verbindung steht und anhand der Photosignale (I1, I2) der beiden Photodetektoren (PD1, PD2) oder einem mit den Photosignalen (I1, I2) gebildeten Auswertsignal zumindest ein Steuersignal (ST1, ST2) zur Ansteuerung der Interferenzeinrichtung (20) bildet,
- wobei der erste und zweite Gitterkoppler (GC1, GC2) in derselben Chipebene (E) eines Chips (2000) des Bauelements (10) angeordnet, insbesondere integriert, sind und
- wobei bei dem ersten und zweiten Gitterkoppler (GC1, GC2) jeweils die zweiten Gitterkopplerausgänge jeweils einen Koppelpfad aus der Chipebene (E) hinaus bilden, und zwar in einem Winkel zwischen 70 und 110 Grad zur Chipebene (E),
**dadurch gekennzeichnet, dass**
- zumindest einer der Photodetektoren (PD1, PD2) oder beide Photodetektoren (PD1, PD2) außerhalb der Chipebene (E) des Chips (2000) angeordnet sind und
- zwischen dem außerhalb der Chipebene (E) des Chips (2000) angeordneten Photodetektor (PD1, PD2) und dem mit diesem in Verbindung stehenden Gitterkoppler (GC1, GC2) ein weiterer Koppler (GC3, GC4) angeordnet ist, insbesondere ein solcher, der in der Chipebene (E) angeordnet ist und dessen Kopplerausgang einen Koppelpfad aus der Chipebene (E) hinaus bildet, und zwar in einem Winkel zwischen 70 und 110 Grad zur Chipebene (E).

2. Photonisches Bauelement (10) nach Anspruch 1,
**dadurch gekennzeichnet, dass**
die Interferenzeinrichtung (20) in der Chipebene (E) des Chips (2000) angeordnet oder in dieser integriert ist.

3. Photonisches Bauelement (10) nach einem der voranstehenden Ansprüche,
**dadurch gekennzeichnet, dass**
mindestens ein in der Chipebene (E) des Chips (2000) des Bauelements (10) angeordneter oder darin integrierter Wellenleiter (101, 102, 201, 202)
- den ersten Ausgang der Interferenzeinrichtung (20) mit dem Gitterkopplereingang des ersten Gitterkopplers (GC1),
- den zweiten Ausgang der Interferenzeinrichtung (20) mit dem Gitterkopplereingang des zweiten Gitterkopplers (GC2),
- den ersten Gitterkopplerausgang des ersten Gitterkopplers (GC1) mit dem ersten Photodetektor (PD1) oder
- den ersten Gitterkopplerausgang des zweiten Gitterkopplers (GC2) mit dem zweiten Photodetektor (PD2)
verbindet.

4. Photonisches Bauelement (10) nach einem der voranstehenden Ansprüche,
**dadurch gekennzeichnet, dass**
der erste und zweite Photodetektor (PD1, PD2) und der erste und zweite Gitterkoppler (GC1, GC2) in derselben Chipebene (E) des Chips (2000) des Bauelements (10) angeordnet, insbesondere integriert, sind.

5. Photonisches Bauelement (10) nach einem der voranstehenden Ansprüche,
**dadurch gekennzeichnet, dass**
das Bauelement (10) einen Summierer (31) aufweist, der als Auswertsignal ein Summensignal durch Summieren der beiden Photosignale (I1, I2) bildet.

6. Photonisches Bauelement (10) nach einem der voranstehenden Ansprüche,
**dadurch gekennzeichnet, dass**
das Bauelement (10) einen Differenzbilder (32) aufweist, der als Auswertsignal ein Differenzsignal durch Subtrahieren eines der beiden Photosignale von dem anderen der beiden Photosignale bildet.

7. Photonisches Bauelement (10) nach einem der voranstehenden Ansprüche,
**dadurch gekennzeichnet, dass**
die Interferenzeinrichtung (20) mindestens einen Mach-Zehnder-Modulator (MZM1, MZM2) aufweist.

8. Photonisches Bauelement (10) nach Anspruch 7,
**dadurch gekennzeichnet, dass**
- der Mach-Zehnder-Modulator eingangsseitig einen 2x2-Richtkoppler (21) mit zwei Eingängen und zwei Ausgängen oder einen 1x2-Teiler mit einem Eingang und zwei Ausgängen aufweist,
- der Eingang des eingangsseitigen 1x2 Teilers oder die zwei Eingänge des eingangsseitigen Richtkopplers den Eingang oder die zwei Eingänge der Interferenzeinrichtung (20) bilden oder mit diesem oder diesen zumindest in Verbindung stehen,
- an die zwei Ausgänge des eingangsseitigen Richtkopplers oder 1x2-Teilers jeweils ein Wellenleiter (22, 23) angeschlossen ist, von denen mindestens einer mit einem von der Steuereinrichtung (30) angesteuerten Phasenmodulator (H1, H2) ausgestattet ist,
- der Mach-Zehnder-Modulator ausgangsseitig einen 2x2-Richtkoppler (24) mit zwei Eingängen und zwei Ausgängen aufweist,
- an die zwei Eingänge des ausgangsseitigen Richtkopplers die zwei Wellenleiter angeschlossen sind und
- die zwei Ausgänge des ausgangsseitigen Richtkopplers die Ausgänge der Interferenzeinrichtung (20) bilden oder mit diesen zumindest in Verbindung stehen.

9. Photonisches Bauelement (10) nach einem der voranstehenden Ansprüche,
**dadurch gekennzeichnet, dass**
die Interferenzeinrichtung (20) zwei oder mindestens zwei Mach-Zehnder-Modulatoren aufweist.

10. Photonisches Bauelement (10) nach Anspruch 9,
**dadurch gekennzeichnet, dass**
die Mach-Zehnder-Modulatoren mittels eines eingangsseitigen Leistungsteilers, insbesondere eines eingangsseitigen 1x2-Teilers oder eines eingangsseitigen 2x2-Richtkopplers, sowie mittels eines ausgangsseitigen Leistungsteilers, insbesondere eines ausgangsseitigen 2x2-Richtkopplers, optisch parallel geschaltet sind.

11. Photonisches Bauelement (10) nach einem der voranstehenden Ansprüche,
**dadurch gekennzeichnet, dass**
die Interferenzeinrichtung (20) einen Ringresonator (500) aufweist.

12. Photonisches Bauelement (10) nach Anspruch 11,
**dadurch gekennzeichnet, dass**
die Interferenzeinrichtung (20) zumindest zwei Koppler (501, 502) aufweist, die jeweils durch einen Abschnitt des Ringresonators (500) und einen zu dem jeweiligen Abschnitt benachbarten Wellenleiter gebildet sind, wobei
- der mindestens eine Eingang der Interferenzeinrichtung (20) oder zumindest einer der Eingänge der Interferenzeinrichtung (20) über einen der zumindest zwei Koppler an den Ringresonator (500) angekoppelt ist,
- der erste Ausgang der Interferenzeinrichtung (20) über den einen der zumindest zwei Koppler oder einen anderen der zumindest zwei Koppler an den Ringresonator (500) angekoppelt ist und
- der zweite Ausgang der Interferenzeinrichtung (20) über den einen der zumindest zwei Koppler oder einen anderen der zumindest zwei Koppler an den Ringresonator (500) angekoppelt ist.

13. Photonisches Bauelement (10) nach einem der voranstehenden Ansprüche,
**dadurch gekennzeichnet, dass**
- der optische Signalpfad (SP1) zwischen dem ersten Ausgang der Interferenzeinrichtung (20) und dem ersten Photodetektor (PD1) und der optische Signalpfad (SP2) zwischen dem zweiten Ausgang der Interferenzeinrichtung (20) und dem zweiten Photodetektor (PD2) achsensymmetrisch zueinander angeordnet sind, und/oder
- der Signalpfad (SP1) zwischen dem ersten Ausgang der Interferenzeinrichtung (20) und dem ersten Photodetektor (PD1) und der Signalpfad (SP2) zwischen dem zweiten Ausgang der Interferenzeinrichtung (20) und dem zweiten Photodetektor (PD2) die gleiche Pfaddämpfung aufweisen, und insbesondere aus baugleichen Komponenten bestehen, die identisch oder symmetrisch zueinander angeordnet sind.

14. Photonisches Bauelement (10) nach einem der voranstehenden Ansprüche,
**dadurch gekennzeichnet, dass**
- in der Chipebene (E) der maximale Abstand zwischen dem ersten Signalpfad (SP1), der zwischen dem ersten Ausgang der Interferenzeinrichtung (20) und dem ersten Photodetektor (PD1) gebildet wird, und dem zweiten Signalpfad (SP2), der zwischen dem zweiten Ausgang der Interferenzeinrichtung (20) und dem zweiten Photodetektor (PD2) gebildet wird, kleiner als 100 µm ist, und/oder
- die Steuereinrichtung (30) in den Chip (2000) monolithisch integriert ist und/oder
- der erste und zweite Gitterkoppler (GC1, GC2) baugleich sind und/oder
- zumindest der zweite Gitterkopplerausgang des ersten Gitterkopplers (GC1) einen optischen Signalausgang des photonischen Bauelements (10) bildet.

15. Verfahren zum Betreiben eines photonisches Bauelements (10),
**dadurch gekennzeichnet, dass**
als photonisches Bauelement (10) ein Bauelement (10) nach einem der voranstehenden Ansprüche betrieben wird, wobei die Steuereinrichtung (30) zumindest die Interferenzeinrichtung (20) ansteuert.

## Claims

1. Photonic component (10) with an interference device (20) having at least one input and at least one first and one second output,
wherein
the component (10 furthermore comprises:
- a first grating coupler (GC1), which has a first and a second grating coupler output and is connected, by way of a grating coupler input, to the first output of the interference device (20),
- a second grating coupler (GC2), which has a first and a second grating coupler output and is connected, by way of a grating coupler input, to the second output of the interference device (20),
- a first photodetector (PD1), which is connected to the first grating coupler output of the first grating coupler (GC1),
- a second photodetector (PD2), which is connected to the first grating coupler output of the second grating coupler (GC2), and
- a control device (30), which is connected to the first and second photodetectors (PD1, PD2) and, on the basis of the photo signals (I1, 12) of the two photodetectors (PD1, PD2) or an evaluation signal formed with the photo signals (I1, I2), forms at least one control signal (ST1, ST2) for controlling the interference device (20),
- wherein the first and second grating couplers (GC1, GC2) are arranged, in particular integrated, in the same chip plane (E) of a chip (2000) of the component (10), and
- wherein, in the case of the first and second grating couplers (GC1, GC2), in each case the second grating coupler outputs form in each case a coupling path out of the chip plane (E), specifically at an angle of between 70 and 110 degrees with respect to the chip plane (E),
**characterized in that**
- at least one of the photodetectors (PD1, PD2) or both photodetectors (PD1, PD2) is/are arranged outside the chip plane (E) of the chip (2000) and
- a further coupler (GC3, GC4) is arranged between the photodetector (PD1, PD2) arranged outside the chip plane (E) of the chip (2000) and the grating coupler (GC1, GC2) connected to said photodetector, in particular a further coupler which is arranged in the chip plane (E) and whose coupler output forms a coupling path out of the chip plane (E), specifically at an angle of between 70 and 110 degrees with respect to the chip plane (E).

2. Photonic component (10) according to Claim 1,
**characterized in that**
the interference device (20) is arranged or integrated in the chip plane (E) of the chip (2000).

3. Photonic component (10) according to either of the preceding claims,
**characterized in that**
at least one waveguide (101, 102, 201, 202) arranged or integrated in the chip plane (E) of the chip (2000) of the component (10) connects
- the first output of the interference device (20) to the grating coupler input of the first grating coupling (GC1),
- the second output of the interference device (20) to the grating coupler input of the second grating coupling (GC2),
- the first grating coupler output of the first grating coupler (GC1) to the first photodetector (PD1) or
- the first grating coupler output of the second grating coupler (GC2) to the second photodetector (PD2) .

4. Photonic component (10) according to any of the preceding claims,
**characterized in that**
the first and second photodetectors (PD1, PD2) and the first and second grating couplers (GC1, GC2) are arranged, in particular integrated, in the same chip plane (E) of the chip (2000) of the component (10).

5. Photonic component (10) according to any of the preceding claims,
**characterized in that**
the component (10) has an adder (31), which forms, as an evaluation signal, a sum signal by adding together the two photo signals (I1, 12).

6. Photonic component (10) according to any of the preceding claims,
**characterized in that**
the component (10) has a subtractor (32), which forms, as an evaluation signal, a difference signal by subtracting one of the two photo signals from the other of the two photo signals.

7. Photonic component (10) according to any of the preceding claims,
**characterized in that**
the interference device (20) has at least one Mach-Zehnder modulator (MZM1, MZM2).

8. Photonic component (10) according to Claim 7,
**characterized in that**
- the Mach-Zehnder modulator has, on the input side, a 2 × 2 directional coupler (21) having two inputs and two outputs or a 1 × 2 splitter having one input and two outputs,
- the input of the input-side 1 × 2 splitter or the two inputs of the input-side directional coupler form or are at least connected to the input or the two inputs of the interference device (20),
- in each case one waveguide (22, 23) is connected to the two outputs of the input-side directional coupler or 1 × 2 splitter, at least one of which waveguides is equipped with a phase modulator (H1, H2) controlled by the control device (30),
- the Mach-Zehnder modulator has, on the output side, a 2 × 2 directional coupler (24) having two inputs and two outputs,
- the two waveguides are connected to the two inputs of the output-side directional coupler, and
- the two outputs of the output-side directional coupler form or are at least connected to the outputs of the interference device (20).

9. Photonic component (10) according to any of the preceding claims,
**characterized in that**
the interference device (20) has two or at least two Mach-Zehnder modulators.

10. Photonic component (10) according to claim 9,
**characterized in that**
the Mach-Zehnder modulators are optically connected in parallel by means of an input-side power splitter, in particular an input-side 1 × 2 splitter or an input-side 2 × 2 directional coupler, and by means of an output-side power splitter, in particular an output-side 2 × 2 directional coupler.

11. Photonic component (10) according to any of the preceding claims,
**characterized in that**
the interference device (20) has a ring resonator (500) .

12. Photonic component (10) according to Claim 11,
**characterized in that**
the interference device (20) has at least two couplers (501, 502) formed in each case by a section of the ring resonator (500) and a waveguide adjacent to the respective section, wherein
- the at least one input of the interference device (20) or at least one of the inputs of the interference device (20) is coupled to the ring resonator (500) via one of the at least two couplers,
- the first output of the interference device (20) is coupled to the ring resonator (500) via said one of the at least two couplers or another of the at least two couplers, and
- the second output of the interference device (20) is coupled to the ring resonator (500) via said one of the at least two couplers or another of the at least two couplers.

13. Photonic component (10) according to any of the preceding claims,
**characterized in that**
- the optical signal path (SP1) between the first output of the interference device (20) and the first photodetector (PD1) and the optical signal path (SP2) between the second output of the interference device (20) and the second photodetector (PD2) are arranged axially symmetrically with respect to one another, and/or
- the signal path (SP1) between the first output of the interference device (20) and the first photodetector (PD1) and the signal path (SP2) between the second output of the interference device (20) and the second photodetector (PD2) have the same path damping, and in particular consist of structurally identical components arranged identically or symmetrically with respect to one another.

14. Photonic component (10) according to any of the preceding claims,
**characterized in that**
- in the chip plane (E) the maximum distance between the first signal path (SP1), which is formed between the first output of the interference device (20) and the first photodetector (PD1), and the second signal path (SP2), which is formed between the second output of the interference device (20) and the second photodetector (PD2), is less than 100 µm, and/or
- the control device (30) is monolithically integrated into the chip (2000), and/or
- the first and second grating couplers (GC1, GC2) are structurally identical, and/or
- at least the second grating coupling output of the first grating coupler (GC1) forms an optical signal output of the photonic component (10).

15. method for operating a photonic component (10),
**characterized in that**
a component (10) according to any of the preceding claims is operated as the photonic component (10), wherein the control device (30) controls at least the interference device (20).

## Revendications

1. Composant photonique (10) pourvu d'un dispositif d'interférence (20) qui comporte au moins une entrée et au moins une première et une deuxième sortie,
le composant (10) comprenant en outre :
- un premier coupleur de réseau (GC1) qui comporte une première et une deuxième sortie de coupleur de réseau et dont une entrée de coupleur de réseau est reliée à la première sortie du dispositif d'interférence (20),
- un deuxième coupleur de réseau (GC2) qui comporte une première et une deuxième sortie de coupleur de réseau et dont une entrée de coupleur de réseau est reliée à la deuxième sortie du dispositif d'interférence (20),
- un premier photodétecteur (PD1) qui est relié à la première sortie de coupleur de réseau du premier coupleur de réseau (GC1),
- un deuxième photodétecteur (PD2) qui est relié à la première sortie de coupleur de réseau du deuxième coupleur de réseau (GC2), et
- un dispositif de commande (30) qui est relié aux premier et deuxième photodétecteurs (PD1, PD2) et qui forme, à partir des photosignaux (I1, I2) des deux photodétecteurs (PD1, PD2) ou d'un signal d'évaluation formé avec les photosignaux (I1, I2), l'au moins un signal de commande (ST1, ST2) destiné à commander le dispositif d'interférence (20),
- les premier et deuxième coupleurs de réseau (GC1, GC2) étant disposés, notamment intégrés, dans le même plan de puce (E) d'une puce (2000) du composant (10), et
- dans les premier et deuxième coupleurs de réseau (GC1, GC2), les deuxièmes sorties de coupleur de réseau formant respectivement un chemin de couplage hors du plan de puce (E), et ce avec un angle compris entre 70 et 110 degrés par rapport au plan de puce (E), **caractérisé en ce que**
- au moins un des photodétecteurs (PD1, PD2) ou les deux photodétecteurs (PD1, PD2) sont disposés à l'extérieur du plan de puce (E) de la puce (2000) et
- entre le photodétecteur (PD1, PD2) disposé à l'extérieur du plan de puce (E) de la puce (2000) et le coupleur de réseau (GC1, GC2) relié audit photodétecteur est disposé un autre coupleur (GC3, GC4), notamment un qui est disposé dans le plan de puce (E) et dont la sortie de coupleur forme un chemin de couplage hors du plan de puce (E), et ce avec un angle compris entre 70 et 110 degrés par rapport au plan de puce (E).

2. Composant photonique (10) selon la revendication 1, **caractérisé en ce que**
le dispositif d'interférence (20) est disposé ou intégré dans le plan de puce (E) de la puce (2000).

3. Composant photonique (10) selon l'une des revendications précédentes,
**caractérisé en ce que**
au moins un guide d'ondes (101, 102, 201, 202) disposé ou intégré dans le plan de puce (E) de la puce (2000) du composant (10) relie
- la première sortie du dispositif d'interférence (20) à l'entrée de coupleur de grille du premier coupleur de réseau (GC1),
- la deuxième sortie du dispositif d'interférence (20) à l'entrée de coupleur de réseau du deuxième coupleur de réseau (GC2),
- la première sortie de coupleur de réseau du premier coupleur de réseau (GC1) au premier photodétecteur (PD1) ou
- la première sortie de coupleur de réseau du deuxième coupleur de réseau (GC2) au deuxième photodétecteur (PD2).

4. Composant photonique (10) selon l'une des revendications précédentes,
**caractérisé en ce que**
les premier et deuxième photodétecteurs (PD1, PD2) et les premier et deuxième coupleurs de réseau (GC1, GC2) sont disposés, notamment intégrés, dans le même plan de puce (E) de la puce (2000) du composant (10).

5. Composant photonique (10) selon l'une des revendications précédentes,
**caractérisé en ce que**
le composant (10) comporte un sommateur (31) qui forme, en tant que signal d'évaluation, un signal somme par sommation des deux photosignaux (I1, I2).

6. Composant photonique (10) selon l'une des revendications précédentes,
**caractérisé en ce que**
le composant (10) comporte une image différentielle (32) qui forme en tant que signal d'évaluation un signal différentiel par soustraction de l'un des deux photosignaux de l'autre des deux photosignaux.

7. Composant photonique (10) selon l'une des revendications précédentes,
**caractérisé en ce que**
le dispositif d'interférence (20) comporte au moins un modulateur de Mach-Zehnder (MZM1, MZM2).

8. Composant photonique (10) selon la revendication 7,
**caractérisé en ce que**
- le modulateur de Mach-Zehnder comporte côté entrée un coupleur directionnel 2x2 (21) pourvu de deux entrées et de deux sorties ou un diviseur 1x2 pourvu d'une entrée et de deux sorties,
- l'entrée du diviseur 1x2 côté entrée ou les deux entrées du coupleur directionnel côté entrée forment l'entrée ou les deux entrées du dispositif d'interférence (20) ou sont au moins reliées à celle-ci ou celles-ci,
- chacune des deux sorties du coupleur directionnel côté entrée ou du diviseur 1x2 est raccordée à un guide d'onde (22, 23), l'un au moins des guides d'onde étant équipé d'un modulateur de phase (H1, H2) commandé par le dispositif de commande (30),
- le modulateur de Mach-Zehnder comporte côté sortie un coupleur directionnel 2x2 (24) pourvu de deux entrées et de deux sorties,
- les deux guides d'ondes sont raccordés côté sortie aux deux entrées du coupleur directionnel et
- les deux sorties du coupleur directionnel côté sortie forment les sorties du dispositif d'interférence (20) ou sont au moins reliées à celles-ci.

9. Composant photonique (10) selon l'une des revendications précédentes,
**caractérisé en ce que**
le dispositif d'interférence (20) comprend deux ou au moins deux modulateurs de Mach-Zehnder.

10. Composant photonique (10) selon la revendication 9,
**caractérisé en ce que**
les modulateurs de Mach-Zehnder sont montés optiquement en parallèle au moyen d'un diviseur de puissance côté entrée, en particulier d'un diviseur 1x2 côté entrée ou d'un coupleur directionnel 2x2 côté entrée, et au moyen d'un diviseur de puissance côté sortie, en particulier d'un coupleur directionnel 2x2 côté sortie.

11. Composant photonique (10) selon l'une des revendications précédentes,
**caractérisé en ce que**
le dispositif d'interférence (20) comporte un résonateur en anneau (500).

12. Composant photonique (10) selon la revendication 11,
**caractérisé en ce que**
le dispositif d'interférence (20) comporte au moins deux coupleurs (501, 502) qui sont chacun formés par une portion du résonateur en anneau (500) et un guide d'ondes adjacent à la portion respective,
- l'au moins une entrée du dispositif d'interférence (20) ou l'une au moins des entrées du dispositif d'interférence (20) étant couplée au résonateur en anneau (500) par le biais de l'un des au moins deux coupleurs,
- la première sortie du dispositif d'interférence (20) étant couplée au résonateur en anneau (500) par le biais de l'un des au moins deux coupleurs ou d'un autre des au moins deux coupleurs, et
- la deuxième sortie du dispositif d'interférence (20) étant couplée au résonateur en anneau (500) par le biais de l'un des au moins deux coupleurs ou d'un autre des au moins deux coupleurs.

13. Composant photonique (10) selon l'une des revendications précédentes,
**caractérisé en ce que**
- le chemin de signal optique (SP1) entre la première sortie du dispositif d'interférence (20) et le premier photodétecteur (PD1) et le chemin de signal optique (SP2) entre la deuxième sortie du dispositif d'interférence (20) et le deuxième photodétecteur (PD2) sont disposés à symétrie axiale l'un par rapport à l'autre, et/ou
- le chemin de signal (SP1) entre la première sortie du dispositif d'interférence (20) et le premier photodétecteur (PD1) et le chemin de signal (SP2) entre la deuxième sortie du dispositif d'interférence (20) et le deuxième photodétecteur (PD2) présentent la même atténuation de chemin, et comprennent notamment des composants structurellement identiques qui sont disposés de manière identique ou symétriquement l'un par rapport à l'autre.

14. Composant photonique (10) selon l'une des revendications précédentes,
**caractérisé en ce que**
- dans le plan de puce (E) la distance maximale entre le premier chemin de signal (SP1), qui est formé entre la première sortie du dispositif d'interférence (20) et le premier photodétecteur (PD1), et le deuxième chemin de signal (SP2), qui est formé entre la deuxième sortie du dispositif d'interférence (20) et le deuxième photodétecteur (PD2), est inférieure à 100 µm, et/ou
- le dispositif de commande (30) est intégré de manière monolithique dans la puce (2000) et/ou
- les premier et deuxième coupleurs de réseau (GC1, GC2) sont structurellement identiques et/ou
- au moins la deuxième sortie de coupleur de réseau du premier coupleur de réseau (GC1) forme une sortie de signal optique du composant photonique (10).

15. Procédé de fonctionnement d'un composant photonique (10),
**caractérisé en ce que**
un composant (10) selon l'une des revendications précédentes est utilisé comme composant photonique (10), le dispositif de commande (30) commandant au moins le dispositif d'interférence (20).
